**Europäisches Patentamt**

**European Patent Office**

**Office européen des brevets**

(19)

(11) Veröffentlichungsnummer: **0 207 330**
**B1**

(12) **EUROPÄISCHE PATENTSCHRIFT**

(45) Veröffentlichungstag der Patentschrift: **12.09.90**

(51) Int. Cl.⁵: **H 02 K 3/24**

(21) Anmeldenummer: **86107863.2**

(22) Anmeldetag: **09.06.86**

(54) Rotor einer elektrischen Maschine.

(30) Priorität: **27.06.85 CH 2726/85**

(43) Veröffentlichungstag der Anmeldung:
**07.01.87 Patentblatt 87/02**

(45) Bekanntmachung des Hinweises auf die
Patenterteilung:
**12.09.90 Patentblatt 90/37**

(84) Benannte Vertragsstaaten:
**CH DE FR IT LI NL SE**

(56) Entgegenhaltungen:
**CH-A- 375 431**
**CH-A- 447 354**
**DE-A-1 962 591**

(73) Patentinhaber: **BBC Brown Boveri AG**
**Haselstrasse**
**CH-5401 Baden (CH)**

(72) Erfinder: **Haditsch, Werner**
**Kirchweg 57**
**CH-5415 Nussbaumen (CH)**

EP 0 207 330 B1

Courier Press, Leamington Spa, England.

**Beschreibung**

Die Erfindung bezieht sich auf einen Rotor einer elektrischen Maschine mit einer gasgekühlten Rotorwicklung gemäss dem gattungsbegriff des Patentanspruchs 1 und nimmt damit Bezug auf einen Stand der Technik, wie er sich beispielsweise aus der DE-B-11 64 564 ergibt.

Bei grossen Turbogeneratoren mit gasgekühlter Rotorwicklung werden in zunehmendem Masse Wicklungsleiter verwendet, die aus zwei aufeinandergelegten Teilleitern mit E- oder U-Profil bestehen. Ein derartiger Aufbau erleichtert die mechanische Bearbeitung der Wicklung, insbesondere bei der Einbringung von Durchbrüchen, Ausnehmungen und dergl. zur Zu- und Abfuhr des Kühlgases (vgl. DE-B-11 64 564, Fig. 4, Pos. 26).

Die Teilleiter sind dabei lediglich aufeinander gelegt. Die Abstützung gegen Fliehkräfte erfolgt durch den Nutkeil, in seitlicher Richtung durch die Nutisolierung.

Im normalen Betrieb der Maschine werden die Teilleiter infolge Fliehkrafteinwirkung derart aufeinandergepresst, dass Relativbewegungen in Umfangsrichtung zwischen aufeinanderliegenden Teilleitern praktisch ausgeschlossen sind. Beim Wellendrehen (Rotieren der Maschine beim Abkühlen mit niedriger Drehzahl, typ. 50 U/min) hingegen treten derartige Relativbewegungen auf, welche nicht nur die Wicklungsisolation beschädigen können, sondern auch Abrieb des Leitermaterials erzeugen, der sich im gesamten Kühlsystem verteilt und die elektrischen Eigenschaften beeinträchtigt und bis hin zum Windungs- oder Erdschluss der Rotorwicklung führen kann. Eine stoffschlüssige Verbindung der beiden Teilleiter mittels Hartlöten scheidet aus, weil durch das Hartlöten das Leitermaterial weichgeglüht würde, was nicht zulässig ist. Weichlöten, z.B. unter Zuhilfenahme dünner Lötfolien führt zu keiner zuverlässigen Verbindung zwischen den Teilleitern. Bei Voll-Last austretendes Lötmittel kann das Kühlsystem verschmutzen.

Ausgehend vom vorstehend geschilderten Stand der Technik liegt der Erfindung die Aufgabe zugrunde, eine Rotorwicklung der eingangs genannten Gattung so zu verbessern, dass in jedem Betriebszustand der elektrischen Maschine, also insbesondere auch beim Wellendrehen, keine Relativbewegungen zwischen aufeinanderliegenden Teilleitern entstehen können.

Die Lösung dieser Aufgabe erfolgt durch die in den Patentansprüchen gekennzeichneten Merkmale.

Der Kern der Erfindung liegt demgemäss im "verdeckten" Vernieten der Teilleiter. Auf diese Weise sind die beiden Teileiter derart miteinander verbunden, dass sie allen senkrecht zur Trennebene auftretenden Beanspruchungen während der Montage der Wicklung und allen während des Betriebes auftretenden Beanspruchungen in Richtung der Trennebene der Teilleiter standhalten. Eine nachträgliche Bearbeitung der Leiteroberflächen nach dem Zusammenfügen, wie sie z.B.

beim Elektronenstrahlschweissen unumgänglich ist, entfällt.

Die im Patentanspruch 2 gekennzeichnete Weiterbildung des Erfindungsgegenstandes mit streifen- oder bandartigen Nietelementen und dementsprechend ausgebildeten Ausnehmungen in den Schenkeln der Teilleiter zeichnet sich durch Wirtschaftlichkeit aus. Dies gilt insbesondere für Teilleiter, die bereits im Zuge der Teilleiterfertigung, also beim Strangziehen, mit den durchgehenden Nuten versehen werden. Daneben können die Schenkel der Teilleiter auch mit einer Mehrzahl von separaten Ausnehmungen, die vorzugsweise miteinander fluchten, versehen sein, in welche entsprechend abgelängte Nietelemente eingelegt sind. Im Grenzfall sind es einzelne, z.B. kreisrunde Bohrungen und dementsprechend zylindrische Nietelemente.

Bei Teilleitern mit E-Profil genügt es in der Regel die Nietverbindung am mittleren Schenkel vorzusehen. Bei Teilleitern mit U-Profil sind entweder beide Schenkel oder zumindest wechselweise der eine und der andere Schenkel zu vernieten.

Die Erfindung wird nachstehend anhand der Zeichnungen, in der Ausführungsbeispiele veranschaulicht sind, näher erläutert.

In der Zeichnung zeigt:

Fig. 1 einen Querschnitt durch den Rotor eines Turbogenerators mit gasgekühlter Rotorwicklung,

Fig. 2 einen Querschnitt durch ein Teilleiterpaar vor dem Vernieten,

Fig. 3 einen Querschnitt durch das Teilleiterpaar nach Fig. 2 nach dem Zusammenpressen (Vernieten),

Fig. 4 eine Skizze zur Verdeutlichung des Einbringens einer Nut in den mittleren Schenkel,

Fig. 5 eine perspektivische Darstellung eines Teilleiterabschnitts mit verschiedenartigen Ausnehmungen zur Aufnahme von Nietelementen,

Fig. 6 einen Ueberblick über verschiedene Geometrien der Ausnehmungen.

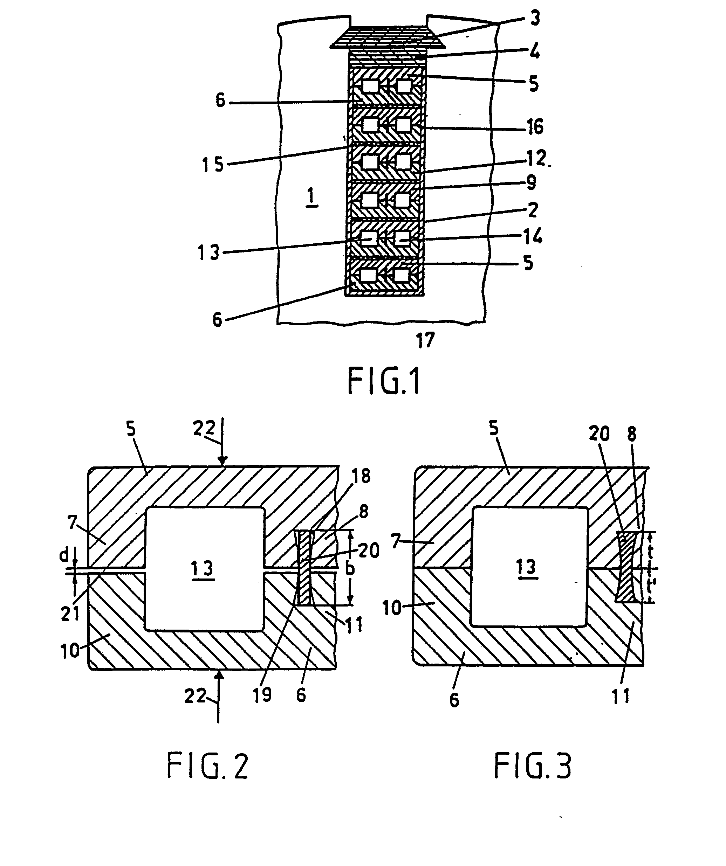

In Fig. 1 sind im Rotorkörper 1 in Axialrichtungverlaufende Nuten 2 angeordnet, in welchen die Rotorwicklung, gesichert durch Nutkeile 3 und Keilunterlagen 4, eingespannt ist. Die Rotorwicklung besteht aus einer Anzahl von gegeneinander isolierten Wicklungsleitern. Jeder Wicklungsleiter ist aus je zwei etwa E-förmig ausgebildeten Teilleitern 5, 6 aus Hartkupfer zusammengesetzt, die mit ihren Schenkeln 7, 8, 9 bzw. 10, 11, 12 so aufeinandergelegt sind, dass Längskanäle 13, 14 zwischen den Teilleitern 5 und 6 gebildet werden. Diese Kanäle 13, 14 durchziehen den gesamten Rotor.

Die Teilleiterpaare 5, 6 sind gegeneinander durch Isolierschichten 15 isoliert. Die Isolierung der Wicklungsleiter gegenüber dem Rotorkörper erfolgt durch eine isolierende Nutauskleidung 16.

Die Nietverbindung zwischen den Teilleitern, welche in Fig. 1 durch die Bezugszahl 17 symbolisiert ist, wird nachstehend anhand der Fig. 2 und 3 näher erläutert.

Jeder Teilleiter 5, 6 weist in aeinem mittleren Schenkel 8 bzw. 11 eine in Leiterlängsrichtung verlaufende, durchgehende Nut 18 bzw. 19 auf, die im Beispielsfall schwalbenschwanzförmigen Querschnitt aufweist. Ihre mittlere Breite beträgt maximal die Hälfte der Schenkelbreite. Ihre Tiefe t, t' entspricht maximal der Schenkelhöhe.

Vor dem Aufeinanderlegen der beiden Teilleiter 5, 6 wird ein Nietelement in Gestalt eines Weichkupferstreifens 20 in die Nut 19 im unteren Teilleiter 6 eingelegt, dessen überstehende Hälfte beim Zusammenfügen in die Nut 18 im oberen Teilleiter 5 eingreift. Die Dicke des Weichkupferstreifens entspricht etwa der Breite der Nut 18 bzw. 19 in ihrem oberflächennahen Bereich.

Die Breite b des Weichkupferstreifens 20 ist zwischen 0,3 und 0,8 mm grösser als die Summe der Nuttiefen t, t'. Auf diese Weise bildet sich beim Zusammenfügen der beiden Teilleiter 5, 6 ein Spalt 21.

Durch Zusammenpressen der beiden Teilleiter 5, 6 in Richtung der Pfeile 22 wird der Weichkupferstreifen 20 plastisch verformt und füllt beide Nuten mehr oder weniger vollständig aus, wie aus Fig. 3 hervorgeht. Die Vollständigkeit des Ausfüllens hängt bei vorgegebenem Volumen des Weichkupferstreifens von dem freien Volumen in den beiden Nuten 18, 19 und umgekehrt ab und lässt sich bei vorgegebener Nutgeometrie einfach berechnen. Pro Längeneinheit Weichkupferstreifen muss das freie Volumen in der Nut dem Volumen des Weichkupferstreifens entsprechen, das von den einander zugekehrten Oberflächen der Schenkel 8 und 11 begrenzt ist, wobei vorausgesetzt ist, dass sich das Leitermaterial (in der Regel Hartkupfer) nicht oder nur unwesentlich verformt.

Das "Vernieten" der beiden Teilleiter kann abschnittsweise, z.B. in einer einfachen Presse, oder kontinuierlich zwischen Rollen erfolgen. Zu beiden Fällen sind seitliche, beide Teilleiter-Seitenflächen überdeckende Führungsmittel, z.B. Führungsrollen, zweckmässig.

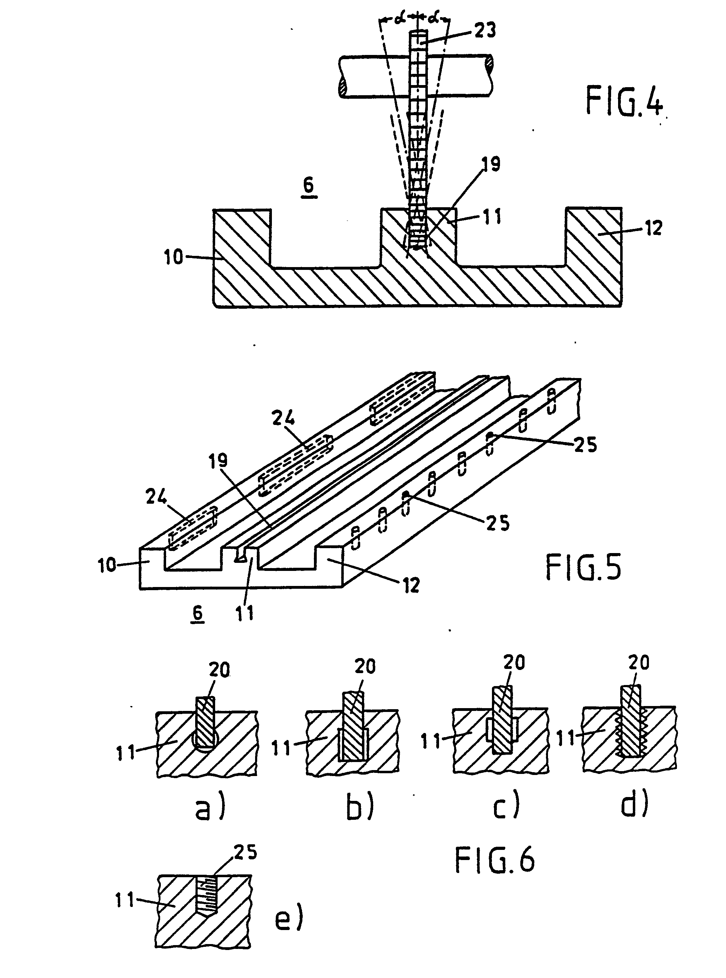

Das Einbringen der schwalbenachwanzförmigen Nut in den mittleren Schenkel 8 bzw. 11 kann beispielsweise durch spanabhebende Bearbeitung mit einem Scheibenfräser 23, der einmal senkrecht zur Stirnfläche der Schenkel und anschliessend um die Winkel 90°+ α und 90° − α angesetzt wird, wie es in Fig. 4 verdeutlicht ist.

Eine andere, einer Serienfertigung eher gerecht werdende Möglichkeit der Einbringung durchgehender Nuten 18 bzw. 19 besteht darin, diese bereits in der Fertigung der Teilleiter, also beim Strangziehen des Halbzeugs herzustellen.

In Fig. 5 sind verschiedene Konfigurationen von Ausnehmungen zur Aufnahme der Nietelemente 20 beispielsweise dargestellt:

Neben einer durchgehenden Nut 19 können unterbrochene Nuten 24 oder gar Sacklochbohrungen 25 in nur einem und/oder den anderen Schenkeln 10, 11, 12 angeordnet sein.

Fig. 6 schliesslich zeigt verschiedene Nutgeometrien, die erfindungsgemäss verwendet werden können. Fig. 6a eine Nut mit einem parallelen Abschnitt, mit einer Breite, welche etwa der Dicke des Weichkupferstreifens 20 entspricht im oberflächennahen Bereich der Nut, welcher Abschnitt sich in einem runden oder ovalen Abschnitt fortsetzt.

Bei der Nutform nach Fig. 6b weist im oberflächennahen Bereich einen der Dicke des Weichkupferstreifens 20 breiten parallelen Abschnitt auf, an den sich ein erweiterter Abschnitt anschliesst. Die Nutform nach Fig. 6c entspricht derjenigen von Fig. 6b mit einem zusätzlichen Abschnitt am Nutgrund, dessen Breite der Dicke des Weichkupferstreifens 20 entspricht.

Fig. 6d zeigt eine Nutform, bei welcher die Nutflanken randriert oder gerieft sind.

Fig. 6e zeigt schliesslich eine Ausnehmung in Form einer Sackloch-Gewindebohrung 25 (vgl. Fig. 5, rechte Hälfte).

Allen Geometrien der Fig. 6 gemeinsam ist das Merkmal, dass im Inneren der Ausnehmung nach Einführen des Nietelements 20 ein freies Volumen verbleibt, welches durch das Stauchen des Nietelementes ausgefüllt wird.

Wie bereits einleitend angedeutet worden ist, ist die Anwendung der erfindungsgemässen Lehre nicht auf Teilleiter mit E-Profil beschränkt.

Bei Teilleitern mit U-Profil, also mit nur zwei Schenkeln, werden die Ausnehmungen in beide Schenkel oder abwechselnd in den einen und den anderen Schenkel eingebracht, wobei der Lösung mit einer oder zwei durchgehenden Nuten und dementsprechend durchgehenden oder dicht an dicht hintereinanderliegenden Weichkupferstreifen 20 der Vorzug zu geben ist, weil nur auf diese Weise der Leiterquerschnitt nicht geschwächt wird und damit die Stromtragfähigkeit dieselbe ist wie bei einem konventionellen Teilleiter.

**Patentansprüche**

1. Rotor einer elektrischen Maschine mit einer gasgekühlten Rotorwicklung, deren Wicklungsleiter in Nuten (2) des Rotorkörpers (1) und gegenüber diesem isoliert eingelegt und durch Nutkeile (3) gesichert sind, wobei die Wicklungsleiter aus je zwei etwa U- oder E-förmig ausgebildeten Teilleitern (5, 6) zusammengesetzt sind, die mit ihren Schenkeln (7, 8, 9, 10, 11, 12) so aneinander gelegt sind, dass Längskanäle (13, 14) zwischen den Teilleitern gebildet werden, welche den Rotor in Längsrichtung vollständig durchziehen, dadurch gekennzeichnet, dass die beiden Teilleiter (5, 6) an ihren Schenkeln (7 bis 12) zumindest teilweise linien- oder punktförmig miteinander vernietet sind, wobei die die Nietelemente (20) aufnehmenden Ausnehmungen (18, 19; 24; 25) nur in den Schenkeln (7 bis 12) der Teilleiter (5, 6) angeordnet sind, ohne die Oberfläche des Wicklungsleiters anzuschneiden.

2. Rotor nach Anspruch 1, dadurch gekennzeichnet, dass die Ausnehmungen als sich über die gesamte Länge der Teilleiter (5, 6) erstreckende Nuten (18, 19) ausgebildet sind und die Nietelemente Streifen (20) oder Bänder aus Weichkupfer sind.

3. Rotor nach Anspruch 1 oder 2, dadurch gekennzeichnet, dass die Ausnehmungen (18, 19) im oberflächennahen Bereich eine Breite aufweisen, welche annähernd der Dicke des Nietelements (20) entspricht und im Innern der Aùsnehmung ein freies Volumen vorgesehen ist, welches durch das Nietelement beim Stauchen zumindest teilweise ausfüllbar ist (Fig. 6).

4. Rotor nach Anspruch 3, dadurch gekennzeichnet, dass die Breite (b) des Nietelements (20) grösser ist als die Summe der Tiefen (t, t') der einander zugeordneten Ausnehmungen (18, 19), vorzugsweise um 0,3 bis 0,8 mm grösser.

5. Rotor nach einem der vorangehenden Ansprüche, dadurch gekennzeichnet, dass das Nietelement (20) aus einem weicheren Werkstoff als das Leitermaterial, vorzugsweise aus Weichkupfer, besteht.

**Revendications**

1. Rotor d'une machine électrique avec un enroulement rotorique refroidi par un gaz, dont les conducteurs rotoriques sont logés dans des rainures (2) du corps de rotor (1) en étant isolés par rapport à ce dernier et sont maintenus par des clavettes (3), dans lequel chacun des conducteurs rotoriques est composé de deux conducteurs partiels (5, 6) ayant sensiblement une forme de E ou de U qui sont appliqués l'un contre l'autre par leurs ailes (7, 8, 9, 10, 11, 12) de façon à former entre les conducteurs partiels des canaux longitudinaux (13, 14) qui traversent entièrement le rotor dans le sens longitudinal, caractérisé en ce que les deux conducteurs partiels (5, 6) sont rivés l'un à l'autre, au moins partiellement, linéairement ou ponctuellement, les cavités (18, 19; 24; 25) qui reçoivent les éléments de rivetage (20) étant ménagées uniquement dans les ailes (7 à 12) des conducteurs partiels (5, 6) sans entamer la surface du conducteur rotorique.

2. Rotor suivant la revendication 1, caractérisé en ce que les cavités forment des rainures (18, 19) s'étendant sur toute la longueur des conducteurs partiels (5, 6) et en ce que les éléments de rivetage sont des rubans (20) ou des bandes de cuivre doux.

3. Rotor suivant la revendication 1 ou 2, caractérisé en ce que les cavités (18, 19) présentent, dans la zone proche de la surface, une largeur qui correspond sensiblement à l'épaisseur de l'élément de rivetage (20) et en ce qu'il est prévu à l'intérieur de la cavité un volume libre, qui peut être rempli au moins partiellement par l'élément de rivetage pendant son écrasement (Fig. 6).

4. Rotor suivant la revendication 3, caractérisé en ce que la largeur (b) de l'élément de rivetage (20) est supérieure à la somme des profondeurs (t, t') des cavités (18, 19) qui se correspondent, de préférence d'une valeur de 0,3 à 0,8 mm.

5. Rotor suivant l'une ou l'autre des revendications précédentes, caractérisé en ce que l'élément de rivetage (20) est constitué d'un matériau plus doux que le matériau des conducteurs, de préférence de cuivre doux.

**Claims**

1. Rotor of an electric machine having a gas-cooled rotor winding, the winding conductors of which are inserted into slots (2) of the rotor body (1) and insulated from this rotor body and are secured by slot wedges (3), the winding conductors being assembled from in each case two part conductors (5, 6) which are constructed to be approximately U- or E-shaped and the legs of which (7, 8, 9, 10, 11, 12) are placed against each other in such a manner that longitudinal ducts (13, 14) are formed between the part conductors which completely pass through the rotor in the longitudinal direction, characterized in that the two part conductors (5, 6) are riveted together at least partially in the shape of lines or dots at their legs (7 to 12), the recesses (18, 19; 24; 25) accommodating the riveting elements (20) being arranged only in the legs (7 to 12) of the part conductors (5, 6) without intersecting the surface of the winding conductor.

2. Rotor according to Claim 1, characterized in that the recesses are constructed as slots (18, 19) which extend over the entire length of the part conductors (5, 6) and the riveting elements are strips (20) or bands of soft copper.

3. Rotor according to Claim 1 or 2, characterized in that the recesses (18, 19) have in the area close to the surface a width which approximately corresponds to the thickness of the riveting element (20) and in the interior of the recess a free volume is provided which can be filled at least partially by the riveting element during compression (Figure 6).

4. Rotor according to Claim 3, characterized in that the width (b) of the riveting element (20) is greater than the sum of the depths (t, t') of the recesses (18, 19) associated with each other, preferably greater by 0.3 to 0.8 mm.

5. Rotor according to one of the preceding claims, characterized in that the riveting element (20) consists of a material which is softer than the conductor material, preferably of soft copper.

FIG.1

FIG.2

FIG.3

FIG.4

FIG.5

FIG.6

a) b) c) d)

e)